# EUROPÄISCHE PATENTSCHRIFT

(11) **EP 3 479 738 B1**
(45) Veröffentlichungstag und Bekanntmachung des Hinweises auf die Patenterteilung: **24.11.2021**
(21) Anmeldenummer: 18203039.5
(22) Anmeldetag: 29.10.2018
(51) Int. Cl.: A47F 3/00, A47F 3/12, A47B 47/00

(54) **VITRINENBAUSATZ, VITRINE UND VITRINENBAUELEMENTE HIERFÜR**
SHOW CASE KIT, SHOW CASE AND SHOW CASE COMPONENTS
MODULE DE VITRINE, VITRINE ET ÉLÉMENTS STRUCTURAUX DE VITRINE ASSOCIÉS

(30) Priorität: 01.11.2017 DE 102017125547
(43) Veröffentlichungstag der Anmeldung: 08.05.2019
(73) Patentinhaber: Schreiber, Bernd, 09468 Geyer (DE)
(72) Erfinder: Schreiber, Bernd, 09468 Geyer (DE)
(74) Vertreter: Steiniger, Carmen

(56) Entgegenhaltungen:
- EP-A1- 0 882 418
- EP-A1- 3 035 827
- DE-A1- 19 634 322

## Beschreibung

Die vorliegende Erfindung betrifft einen Vitrinenbausatz, wobei eine Vitrine eine Vorrichtung oder eine Bauelementekombination ist, die wenigstens eine durchsichtige Seitenscheibe besitzt, durch welche Objekte, die sich hinter dieser Seitenscheibe befinden, von außen sichtbar sind, mit wenigstens einer rahmenlosen Seitenscheibe, die eine Scheibenvorderseite, eine Scheibenrückseite, einen sich zwischen der Scheibenvorderseite und der Scheibenrückseite erstreckenden Scheibenrand und vier Scheibenecken aufweist, und wenigstens einer Profilleiste, die sich von einer ersten der Scheibenecken bis zu einer zweiten der Scheibenecken entlang des Scheibenrandes erstreckt, wobei die Profilleiste einen entweder den Scheibenrand und die Scheibenrückseite in einem Randbereich, oder nur die Scheibenrückseite in einem Randbereich, oder nur den Scheibenrand bedeckenden Befestigungsabschnitt und einen sich an den Befestigungsabschnitt anschließenden und beispielsweise eine Deck- oder Bodenplatte haltenden Halteabschnitt aufweist.

Zur Ausstellung von Exponaten werden oftmals Glasvitrinen verwendet, da in diesen Exponate von mehreren Seiten betrachtet werden können und zugleich die in der Vitrine vorgesehenen Exponate vor Umgebungseinflüssen, wie beispielsweise Staub, UV-Licht oder Berührung durch eine Person, geschützt sind.

Insbesondere bei Vitrinen, welche häufig transportiert werden müssen, ist es von Vorteil, wenn die Vitrinen leicht montier- und demontierbar und nicht sperrig sind. Die demontierbaren Vitrinen sollten einen geringen Platzbedarf haben, möglichst wenig Ladefläche einnehmen und einfach verpackt werden können, sodass diese während des Transportes nicht beschädigt werden.

Es sind daher Vitrinen entwickelt worden, welche einfach und schnell auseinander und wieder zusammengebaut werden können, wodurch diese gut zu transportieren sind.

Eine derartige Vitrine hat unter anderem die Frank Europe GmbH entwickelt. Die Vitrine der Frank Europe GmbH weist einzelne Vitrinenscheiben, Profilleisten, welche auf Rändern der Vitrinenscheiben aufgesteckt werden, und Eckverbinder zum Verbinden von aneinander grenzenden Profilleisten auf. Durch den Verzicht auf Kleb- und Dichtstoffe zum Verbinden den Vitrinenscheiben, kann die bekannte Vitrine beliebig oft zusammen und wieder auseinander gebaut werden. Da bei der bekannten Vitrine jedoch komplett auf Klebstoff verzichtet wird, können die die Vitrine ausbildenden Scheiben nur durch Spannen in einem zusammengebauten Zustand gehalten werden. Hierzu ist es erforderlich, dass an allen Scheibenrändern der Scheiben ― sowohl an den vertikalen als auch an den horizontalen Scheibenrändern ― eine Profilleiste angebracht wird. Durch das Vorsehen derart vieler Profilleisten wird jedoch nicht nur der Aufbau und die Demontage der Vitrine verkompliziert, sondern auch die Optik und Einblickbarkeit negativ beeinträchtigt. Auch die Ausgestaltung der bei der bekannten Vitrine verwendeten Profilleisten hat sich, insbesondere im Hinblick auf die Reinigung und die Optik der Vitrine, als nachteilig erwiesen. So umgreifen die verwendeten Profilleisten die Ränder der Vitrinenscheiben komplett, sodass die Profilleisten nicht bündig mit einer Vorderseite der jeweiligen Scheibe abschließen.

Eine weitere zusammensteckbare und wieder demontierbar Vitrine ist in der Druckschrift DE 101 28 888 A1 beschrieben. Diese Vitrine besteht aus Vitrinenwänden und einem aus einzelnen Teilrahmen bestehenden Profilrahmen, welcher auf die Vitrinenwände gesteckt wird. Der Profilrahmen weist ein Nut-Feder-System auf, welches dem Zusammenstecken des Profilrahmens und damit dem Ausbilden der Vitrine dient. Auch bei dieser Vitrine verlaufen entlang aller Kanten der Vitrine Profilrahmen, wodurch nicht nur die Optik der Vitrine beeinträchtigt wird, sondern auch die Sichtbarkeit der in der Vitrine platzierten Objekte behindert wird. Zudem ist auch der Aufbau der Vitrine durch die Nut-Feder-Konstruktion recht aufwändig.

Aus der Druckschrift EP 0 882 418 A1 ist eine Vitrine bekannt, bei welcher zwei, in einem rechten Winkel aneinander angrenzende Glasplatten mittels einer aus einer Verschlussstange und Verbindungselementen aufweisenden Konstruktion verbunden werden. Hierzu sind an den Enden der Glasplatten jeweils unterschiedliche Profilleisten angeklebt. An einer ersten dieser Profilleisten wird die Verschlussstange, die Segmente mit geringerem Querschnitt und Segmente mit größerem Querschnitt aufweist, gehalten. An einer zweiten der Profilleisten sind die voneinander beabstandeten Verbindungselemente mit C-förmigem Querschnitt vorgesehen. Zum Verbinden der beiden Glasplatten werden die Verbindungselemente mittels eines manuell bewegbaren Gleitelementes auf die Höhe der Segmente mit geringerem Querschnitt gebracht und auf diese aufgeschoben.

In der Druckschrift EP 3 035 827 A0 ist eine Glasvitrine offenbart, bei der zwei in einem rechten Winkel aneinander angrenzende Glasplattenelemente mit Hilfe von an den Stirnseiten der Glasplattenelemente angeklebten profilierten Randstreifen, in welche eine Profilschiene eingeführt ist, verbunden sind.

Die Druckschrift DE 196 34 322 A1 schlägt eine Verbindung von zwei Wandteilen einer Vitrine vor, bei der jeweils an die Innenseiten der Wandteile eine Befestigungsschiene aufgeklebt ist, die jeweils eine Hakenleiste aufweist. In der zwischen den Wandteilen ausgebildeten Ecke ist ein Verbindungsteil vorgesehen, das aus einem Beschlagteil, einem Bügel, Schraubelementen und Federn besteht. Mittels der Schraubelemente wird der bogenförmige, Flanken aufweisende und gegen die Federn drückende Bügel in seiner Position verändert, sodass er die jeweiligen Hakenleisten hintergreifen kann.

In der Druckschrift DE 196 34 322 C2 ist eine Vitrine offenbart, welche aus lösbar miteinander verbundenen Wänden, nämlich Seitenwänden, Türen und einem Deckteil, besteht. Die Wände sind aus Glas ausgebildet und mit Verbindungsteilen verspannt. Zur Verbindung von zwei Wänden sind an Seitenrückwänden der Wände in vorgegebener Position Befestigungsschienen angeklebt. Die Befestigungsschienen sind durch ein Verbindungsteil miteinander verbunden. Das Verbindungsteil besteht aus einem Bügel und einem Beschlagteil, wobei im Verbindungszustand die Befestigungsschienen mit dem Beschlagteil und dem Bügel fest verspannt sind, sodass die Wände selbst spannungsfrei gehalten werden.

Auch die Druckschrift EP 3 035 827 B1 beschreibt eine beliebig oft zusammensetzbare und wieder zerlegbare Vitrine. Die in der Druckschrift EP 3 035 827 B1 beschriebene Vitrine, welche aus einzelnen Glasplattenelementen ausgebildet ist, wird durch an den Glasplattenelementen angeklebte Befestigungselemente und zugehörige Profilschienen zusammengehalten. Die Profilschienen weisen an zwei gegenüberliegenden Seiten angeordnete Profilstreifen auf, sodass durch eine Profilschiene ein formschlüssiger Eingriff von zugeordneten Befestigungselementen von zwei fluchtend zueinander angeordneten Glasplattenelementen ermöglicht wird. Je nach Ausgestaltungsvariante der Befestigungselemente und der Profilschienen kann sich die Montage und Demontage der Vitrine jedoch als recht schwierig erweisen.

Es ist daher die Aufgabe der vorliegenden Erfindung, einen Bausatz für eine Vitrine bereitzustellen, mit dem die Vitrine stabil montierbar und dennoch einfach demontierbar ist.

Die Aufgabe wird durch einen Bausatz der eingangs genannten Art gelöst, bei welchem der Befestigungsabschnitt mit dem Scheibenrand und/oder dem Randbereich der Scheibenrückseite verklebt ist, und in dem Halteabschnitt wenigstens eine in Längsrichtung der Profilleiste verlaufende Aufnahme mit einem darin aufgenommenen oder aufnehmbaren, gelenkig ausgebildeten Profilleistenverbindungselement vorgesehen ist.

Vorteilhafterweise kann mit dem erfindungsgemäßen Bausatz einfach und mit wenig Zeitaufwand eine Vorrichtung oder eine Bauelementekombination, die wenigstens eine durchsichtige Seitenscheibe besitzt, durch welche Objekte, die sich hinter dieser Seitenscheibe befinden, von außen sichtbar sind, aufgestellt werden, welche genauso einfach wieder demontierbar ist.

In der vorliegenden Erfindung wird unter einer Vitrine eine Vorrichtung oder eine Bauelementekombination verstanden, die wenigstens eine durchsichtige Seitenscheibe besitzt, durch welche Objekte, die sich hinter dieser Seitenscheibe befinden, von außen sichtbar sind. Das heißt, in der vorliegenden Erfindung muss eine Vitrine nicht unbedingt mehr als eine Seitenscheibe besitzen. Sie muss auch nicht unbedingt einen Deckel und/oder einen Boden aufweisen. Im Folgenden wird daher zur Vereinfachung der erfindungsgemäße Bausatz für eine Vorrichtung oder eine Bauelementekombination, die wenigstens eine durchsichtige Seitenscheibe besitzt, durch welche Objekte, die sich hinter dieser Seitenscheibe befinden, von außen sichtbar sind, als Vitrinenbausatz oder als Bausatz für eine Vitrine bezeichnet.

Der erfindungsgemäße Bausatz für eine Vitrine weist wenigstens eine rahmenlose Seitenscheibe, eine Profilleiste und ein Profilleistenverbindungselement zum Verbinden von zwei Profilleisten, welche jeweils an einer Seitenscheibe angebracht sind, auf.

Ein Vitrinenbausatz weist in der vorliegenden Erfindung wenigstens eine Seitenscheibe, wenigstens eine an einem oberen oder unteren Ende dieser Seitenscheibe vorgesehene Profilleiste und wenigstens ein Profilleistenverbindungselement auf. Ein derartiger Vitrinenbausatz kann beispielsweise dafür verwendet werden, um eine in der Wand vorgesehene Nische oder ein in einer Schrankwand vorgesehenes Fach im Nachhinein mit einer Glasscheibe zu verschließen und dadurch eine Vitrine auszubilden. Der erfindungsgemäße Vitrinenbausatz kann auch als Vitrinenbauelementekombination bezeichnet werden. Selbstverständlich kann der erfindungsgemäße Vitrinenbausatz in Ausführungsformen der Erfindung auch mehr als eine Seitenscheibe, beispielsweise vier Seitenscheiben und darüber hinaus eine Deckplatte und eine Bodenplatte mit jeweils zwei an den Seitenscheiben vorgesehenen Profilleisten und acht Profilleistenverbindungselementen aufweisen. Bei einer derartigen Ausführungsform ist es keineswegs erforderlich, dass alle Seitenscheiben durchsichtig, beispielsweise aus Glas ausgebildet sind. Auch die Deck- und/oder die Bodenplatte müssen nicht durchsichtig oder aus Glas ausgebildet sein. Vielmehr ist es ausreichend, wenn wenigstens eine der Seitenscheiben aus Glas ausgebildet ist. Ferner können jedoch auch mehr als eine Seitenscheibe oder alle Seitenscheiben als auch die Deck- und/oder Bodenplatte durchsichtig ausgebildet sein.

Die verwendete(n) Seitenscheibe(n) weist/weisen eine Scheibenvorderseite, eine Scheibenrückseite, einen sich zwischen der Scheibenvorderseite und der Scheibenrückseite erstreckenden Seitenrand und vier Scheibenecken auf. Besonders bevorzugt ist/sind die Seitenscheibe(n) aus Glas ausgebildet, da so das Innere der durch den Vitrinenbausatz ausgebildeten Vitrine sehr gut sichtbar ist. In alternativen Ausführungsformen des erfindungsgemäßen Vitrinenbausatzes kann/können die Seitenscheibe(n) jedoch auch aus Plexiglas oder einem anderen Plattenmaterial ausgebildet sein. Ebenso kann auch wenigstens eine der die Vitrine bildenden Seitenscheiben aus Holz, Kunststoff oder Metall bestehen.

Zum Verbinden der Seitenscheiben zu einer Vitrine ist an jeder Seitenscheibe wenigstens eine Profilleiste vorgesehen. Die jeweilige Profilleiste erstreckt sich hierbei zwischen zwei Scheibenecken der jeweiligen Seitenscheibe, womit die Profilleiste die gleiche Länge wie die Seitenscheibe aufweist. Die Seitenscheiben der Vitrine können hierdurch so verbunden werden, dass diese im geschlossenen Zustand der Vitrine bündig abschließen und kein unschöner Spalt zwischen den Seitenscheiben ausgebildet wird.

Je nach Ausgestaltungsform des erfindungsgemäßen Vitrinenbausatzes kann die jeweilige Profilleiste entweder an dem Scheibenrand und einem Randbereich der Scheibenrückseite, nur in einem Randbereich der Scheibenrückseite oder nur an dem Scheibenrand befestigt sein. Vorzugsweise ist die jeweilige Profilleiste hierbei mit dem Scheibenrand und/oder dem Randbereich der Scheibenrückseite verklebt. In anderen Ausgestaltungsformen der Erfindung könnte die jeweilige Profilleiste jedoch auch mittels einer Magnetverbindung, einer Schraubverbindung, formschlüssig oder einer anderen Verbindungsvariante an der jeweiligen Seitenscheibe angebracht sein.

Erfindungsgemäß weist die Profilleiste einen Befestigungsabschnitt und einen Halteabschnitt auf, wobei die Profilleiste mittels des Befestigungsabschnittes an der jeweiligen Seitenscheibe angebracht ist. Der Halteabschnitt der Profilleiste schließt sich unmittelbar an den Befestigungsabschnitt an und dient der Aufnahme einer Deck- oder Bodenplatte der auszubildenden Vitrine.

Anwendungsfallspezifisch kann die Deck- und/oder die Bodenplatte aus Glas, Plexiglas, Kunststoff, Holz, Metall oder einem anderen Werkstoff ausgebildet sein. Im Hinblick auf die Stabilität der Vitrine hat es sich jedoch als vorteilhaft erwiesen, wenn insbesondere die Bodenplatte, auf welcher beispielsweise Exponate platziert werden, nicht aus Glas gefertigt ist.

Für einen besonders guten Stand der auszubildenden Vitrine hat es sich zudem als günstig herausgestellt, wenn an der Bodenplatte Füße angebracht sind. Je nach Ausführungsform kann die Anzahl, Form, Größe und Materialauswahl der Füße variieren. Günstig ist es jedoch, wenn die Vitrine wenigstens drei, bevorzugt vier Füße aufweist. Die Füße können beispielsweise aus Kunststoff, Metall oder aus Filz ausgebildet sein. Ferner können die Füße auch höhenverstellbar sein, sodass Unregelmäßigkeiten eines Bodens, auf dem die Vitrine aufgestellt wird, ausgeglichen werden können.

Vorteilhafterweise ist die den Befestigungsabschnitt und den Halteabschnitt aufweisende Profilleiste einstückig ausgebildet. Ebenso kann die Profilleiste jedoch auch aus mehreren Komponenten zusammengesetzt werden. So kann die Profilleiste beispielsweise durch Verbinden des Befestigungs- und des Halteabschnittes zusammengesetzt werden.

Zur Ausgestaltung einer besonders stabilen Vitrine, welche dennoch einen guten Einblick in das Innere der Vitrine aufweist, hat es sich als vorteilhaft erwiesen, wenn an jedem, in funktionsgerechter Ausrichtung der Vitrine nach unten und oben zeigenden Scheibenrand der einzelnen Seitenscheiben der Vitrine jeweils eine Profilleiste vorgesehen ist. Beim Zusammenfügen der einzelnen Seitenscheiben zu der Vitrine wird so ein am oberen Rand und am unteren Rand der Vitrine verlaufender Rahmen ausgebildet. Durch den Verzicht auf entlang der vertikalen Scheibenränder verlaufende Profilleisten wird ein ungehinderter Blick in das Innere der Vitrine freigegeben. Zudem wird auch der Aufbau und die Demontage der Vitrine vereinfacht. Ebenso kann jedoch auch nur eine Profilleiste am oberen oder nur eine Profilleiste am unteren Ende der Scheibenränder vorgesehen sein, sodass nur ein oberer Rahmen oder nur ein unterer Rahmen ausgebildet wird.

Zum optimalen Verbinden der die Rahmen bildenden Profilleisten sind diese vorteilhafterweise an ihren Längsenden auf Gehrung geschnitten. Ebenso können die Enden der Profilleisten jedoch auch stumpf ausgebildet sein. Insofern die Profilleisten Gehrungen aufweisen, ist es zudem günstig, wenn auch die in funktionsgerechter Ausrichtung der Vitrine vertikalen Scheibenränder eine Gehrung aufweisen, sodass eine Vitrine ohne Spalt zwischen den Seitenscheiben zur Verfügung gestellt werden kann.

Insofern die Profilleisten keine Gehrung aufweisen, hat es sich als vorteilhaft herausgestellt, wenn an einer von zwei zu verbindenden Seitenscheiben eine Profilleiste vorgesehen ist, welche mittig an dieser Seitenscheibe angebracht ist, sich jedoch nicht über die komplette Länge dieser Seitenscheibe erstreckt, sondern beidseitig um die Tiefe der zweiten Seitenscheibe plus der Tiefe der Profilleiste gekürzt ist. Die zu verbindenden Seitenscheiben und Profilleisten können jedoch auch anders ausgestaltet sein.

Für ein Fügen der an den Seitenscheiben angebrachten Profilleisten ist jeweils an einem Längsende des Halteabschnittes wenigstens eine in Längsrichtung der Profilleiste verlaufende Aufnahme eingebracht. In die Aufnahme ist ein gelenkig ausgebildetes Profilleistenverbindungselement einsteckbar, mittels welchem zwei zusammenstoßende Profilleisten verbunden werden können. Vorteilhafterweise ist die Aufnahme hierbei komplementär zu der Form des Profilleistenverbindungselementes ausgebildet.

Die stirnseitig in die Profilleisten eingebrachten oder einbringbaren Aufnahmen weisen im einfachsten Fall einen kreisrunden Innenquerschnitt auf, wobei deren Durchmesser im Vergleich zur Länge klein ist. Die Aufnahmen können jedoch auch einen viereckigen oder anders ausgebildeten Innenquerschnitt aufweisen.

Die Aufnahmen können auch einen im Querschnitt beispielsweise runden Aufnahmeteil, einen mit dem Aufnahmeteil verbundenen Verbindungssteg und einen sich an den Verbindungssteg anschließenden, parallel zu dem Aufnahmeteil verlaufenden, z.B. im Querschnitt rechteckigen Fixierelementführungsteil aufweisen. Der Querschnitt der Aufnahmen kann hierbei wie ein auf einem Boden stehender Baum aussehen, wobei dessen "Baumkrone" dem Aufnahmeteil, der "Baumstamm" dem Verbindungssteg und der "Boden" dem Fixierelementführungsteil entspricht. Bei einer solchen Ausgestaltung der Aufnahme dient der Aufnahmeteil der Aufnahme eines Dübels des Profilleistenverbindungselementes. Der Fixierelementführungsteil dient einem leichteren Einbringen einer im Folgenden noch detaillierter beschriebenen Öffnung für ein Fixierelement in die Profilleiste.

Um diese Öffnung, welche vorzugsweise als Gewindebohrung ausgebildet ist, besonders einfach in die Profilleiste einbringen zu können, ist es vorteilhaft, wenn eine Höhe bzw. Breite des Fixierelementführungsteils einem Durchmesser der in die Profilleiste einzubringenden Öffnung entspricht.

Im Vergleich zu dem Fixierelementführungsteil weist der Verbindungssteg eine kleinere Höhe bzw. Breite auf, wodurch ein Herausrutschen eines Dübels des Profilleistenverbindungselementes aus der Aufnahme erschwert wird. Im Bereich der Öffnung für das Fixierelement wird der Verbindungssteg auf die Größe des Fixierelementes beispielsweise durch Bohren aufgeweitet, sodass das Fixierelement problemlos in die Einschnürung des Dübels des Profilleistenverbindungselementes eingreifen kann.

Durch die gelenkige Ausgestaltung des Profilleistenverbindungselementes lassen sich die Profilleisten und damit die Seitenscheiben der Vitrine besonders einfach verbinden und in einem Winkel von beispielsweise 90° zueinander anordnen. Ferner kann die Vitrine durch die Benutzung eines gelenkartigen Profilleistenverbindungselementes auch einfach wieder demontiert werden.

Zum Verbinden von zwei Profilleisten werden die gelenkartig ausgebildeten Profilleistenverbindungselemente, welche vorzugsweise, aber nicht unbedingt aus zwei stab-, rohr- oder kugelförmigen Elementen bestehen, die durch ein Gelenk miteinander verbunden sind, jeweils mindestens bis zu dem Gelenk in die jeweilige Aufnahme eingeführt. Das zwischen den stab-, rohr- oder kugelförmigen Elementen vorgesehene Gelenk ermöglicht es, die zu verbindenden Seitenscheiben in unterschiedlichen Stellungen zueinander anzuordnen, was insbesondere die Montage und Demontage einer daraus auszubildenden Vitrine vereinfacht.

Als besonders günstig hat es sich erwiesen, wenn das Profilleistenverbindungselement zwei, über ein Gelenk verbundene Dübel aufweist. Beim Verbinden von zwei Profilleisten wird hierbei ein erster Dübel des Profilleistenverbindungselementes in eine Aufnahme einer ersten Profilleiste und der zweite Dübel des Profilleistenverbindungselementes in die Aufnahme einer zweiten Profilleiste eingesteckt. Ein Verkleben der Profilleisten zum Ausbilden der Vitrine ist damit nicht notwendig. Insofern jedoch eine Vitrine ausgebildet werden soll, welche nicht wieder demontiert werden soll, können die Profilleisten auch zusätzlich zu der Verbindung mittels der Profilleistenverbindungselemente verklebt werden.

Auch ist es möglich, dass nur ein erster Dübel des Profilleistenverbindungselementes in die Aufnahme eingeklebt wird, sodass dieser erste Dübel dauerhaft mit der Aufnahme verbunden ist. Ein zweiter Dübel des Profilleistenverbindungselementes hingegen wird bei dieser Ausführungsform nicht in der Aufnahme eingeklebt, sodass die Vitrine weiterhin demontierbar ist, wobei die Dübel während der Demontage und des Transportes der Vitrine nicht verloren gehen können.

Wenn das Profilleistenverbindungselement zwei Dübel aufweist, kann die Aufnahme für das Profilleistenverbindungselement vorteilhafterweise als einfache Bohrung ausgestaltet werden. Eine solche Bohrung ist nicht nur fertigungstechnisch einfach, sondern auch kostengünstig zu realisieren.

Je nach Ausgestaltungsform der mit dem erfindungsgemäßen Vitrinenbausatz auszubildenden Vitrine können die Abmessungen der Aufnahme und des dazugehörigen Profilleistenverbindungselementes variieren. Im Hinblick auf die Stabilität sowie die Einfachheit des Zusammen- und Abbaus der auszubildenden Vitrine hat es sich jedoch als günstig erwiesen, wenn jeder Dübel des Profilleistenverbindungselementes eine Länge zwischen 2 cm und 8 cm und einen Durchmesser zwischen 0,4 cm und 1 cm aufweist.

Ganz besonders bevorzugt ist das Profilleistenverbindungselement aus Metall ausgebildet, kann jedoch auch aus Holz, Plastik oder einem anderen Werkstoff bestehen.

Hinsichtlich der Fixierung des Profilleistenverbindungselementes in den Profilleisten hat es sich zudem als günstig erwiesen, wenn die Dübel jeweils eine Einschnürung aufweisen.

Die Einschnürung ist günstigerweise an einem von dem Gelenk entfernten Ende des Dübels vorgesehen und derart ausgebildet, dass ein Fixierelement in die Einschnürung eingreifen kann und damit ein Herausrutschen des Dübels aus der Aufnahme der Profilleiste verhindert werden kann. Das Fixierelement kann beispielsweise in Form eines Stiftes oder einer Schraube ausgebildet sein, welche(r) senkrecht oder nahezu senkrecht zu dem Dübel angeordnet wird, wobei ein Ende des Stiftes oder der Schraube in die Einschnürung des Dübels eingreift. In der Profilleiste ist der Einschnürung gegenüber einer quer zur Längsrichtung der Profilleiste verlaufenden und bis zu der Aufnahme in der Profilleiste reichenden Öffnung vorgesehen, in welcher das Fixierelement aufnehmbar ist. Die Öffnung geht also nicht vollständig durch die Profilleiste hindurch. Durch diese Öffnung kann das Fixierelement von außen durch eine Wand der Profilleiste bis in die Aufnahme eingebracht werden, wo dann ein Ende des Fixierelementes in die Einschnürung des in die Aufnahme eingebrachten Dübels eingreift. Die Öffnung ist vorteilhafterweise der Form und Größe des Fixierelementes angepasst, sodass dieses durch die Profilleiste hindurch in die Einschnürung eingreifen kann. Im einfachsten Fall ist die Öffnung als Durchgangsbohrung ausgebildet. Vorzugsweise ist die Öffnung an einer Innenseite der Profilleiste, also an einer Seite der Profilleiste, die bei zusammengebauter Vitrine zum Vitrineninnenraum zeigt, vorgesehen. Dadurch sieht man weder die Öffnung noch das darin eingebrachte Fixerelement von außen.

In alternativen Ausgestaltungsvarianten des erfindungsgemäßen Vitrinenbausatzes kann anstatt des dübelartig ausgestalteten Profilleistenverbindungselementes jedoch auch wenigstens ein ein Gewinde aufweisendes Profilleistenverbindungselement, das in eine Aufnahme der Profilleiste eingeschraubt wird, ein Kugeln oder kugelförmige Elemente aufweisendes Profilleistenverbindungselement oder ein länglich ausgebildetes Profilleistenverbindungselement, dessen längliche Elemente einen dreieckigen, rechteckigen, vieleckigen, ovalen oder anders ausgestalteten Querschnitt aufweisen, verwendet werden.

Hinsichtlich einer Befestigung der jeweiligen Profilleiste an der jeweiligen Seitenscheibe hat es sich als vorteilhaft erwiesen, wenn die Profilleiste einen L-, T- oder Z-förmigen Querschnitt aufweist.

So kann eine L-förmige Profilleiste entweder mit einer Längsseite eines vertikalen Schenkels des L an einem oberen oder unteren Randbereich der Scheibenrückseite oder mit einer Querseiten des vertikalen Schenkels des L an einem in funktionsgerechter Ausrichtung der Vitrine nach oben oder unten zeigenden Scheibenrand befestigt werden, wobei zugleich durch den horizontalen Schenkel des L die Boden- oder Deckplatte der Vitrine gehalten werden kann.

Eine Z-förmige Profilleiste eignet sich insbesondere zum Anbringen an einem oberen Ende der Seitenscheibe, wobei hier ein oberer horizontaler Schenkel des Z den nach oben ausgerichteten Scheibenrand und ein vertikaler Schenkel des Z den oberen Randbereich der Scheibenrückseite überragend angeordnet ist. Der untere horizontale Schenkel einer solchen Z-förmigen Profilleiste dient wiederum der Aufnahme der Deckplatte.

Eine T-förmig ausgestaltete Profilleiste hingegen kann optimal an einem unteren Ende der Seitenscheibe angebracht werden. Hierbei wird die T-förmige Profilleiste um 180° gedreht an der Seitenscheibe angebracht, sodass sich der vertikale Schenkel des T entlang eines unteren Randbereiches der Scheibenrückseite und eine Hälfte des horizontalen Schenkels des T entlang des nach unten zeigenden Scheibenrandes erstreckt.

In weiteren Ausgestaltungsvarianten des erfindungsgemäßen Vitrinenbausatzes kann die Profilleiste jedoch auch anders ausgestaltet sein. So kann die Profilleiste beispielsweise U-förmig ausgestaltet sein, wobei die U-förmige Profilleiste 90° gedreht an der jeweiligen Seitenscheibe vorgesehen und die Boden- oder Deckplatte zwischen den eigentlich vertikal ausgerichteten Schenkeln des U eingesteckt wird.

Hinsichtlich der Gestaltung der Profilleiste hat es sich zudem als Vorteil herausgestellt, wenn der Befestigungsabschnitt zumindest teilweise komplementär zu einem Winkel ausgebildet ist, den der Scheibenrand mit der Scheibenrückseite ausbildet. Durch eine solche Ausgestaltung des Befestigungsabschnittes der Profilleiste kann diese, insbesondere bei einer Z- oder T-förmigen Ausgestaltung der Profilleiste, besonders gut an der Seitenscheibe fixiert und mit dieser beispielsweise durch Verkleben verbunden werden. Hierbei kann in dem Befestigungsabschnitt auch eine in Längsrichtung der Profilleiste verlaufende Nut eingebracht sein, welche den gleichen oder nahezu gleichen Querschnitt wie der Randbereich der jeweiligen Seitenscheibe, an welchen die jeweilige Profilleiste angebracht werden soll, aufweist.

In einer Ausbildung des erfindungsgemäßen Vitrinenbausatzes weist der Scheibenrand eine Fase und der Befestigungsabschnitt eine zumindest teilweise komplementär zu der Fase ausgebildete Winkelnut auf, wobei die Fase so ausgerichtet ist, dass sich die Dicke der Seitenscheibe in Richtung des Halteabschnittes verjüngt und die Scheibenvorderseite bündig mit einer Vorderkante des Befestigungsabschnittes abschließt. Vorteilhafterweise schließt die Profilleiste bei einer solchen Ausgestaltungsvariante des erfindungsgemäßen Vitrinenbausatzes bündig mit der Scheibenvorderseite ab, wobei zugleich die Seitenscheibe sicher und in der Profilleiste geklemmt ist. Ein Herausrutschen der Seitenscheibe aus der Profilleiste wird durch die an dem Scheibenrand vorgesehene Fase und die komplementär dazu ausgebildete Winkelnut vermieden. Zudem ist die Vitrine durch den bündigen Abschluss der Vorderkante der Profilleiste mit der Scheibenvorderseite gut zu reinigen und optisch sehr ansprechend.

Erfindungsgemäß bildet die Fase eine Gehrung und weist die Winkelnut einen dreieckigen Querschnitt auf.

In alternativen Ausgestaltungsformen des Vitrinenbausatzes kann der Scheibenrand anstatt der Fase jedoch auch eine Stufe, einen rechteckigen oder einen in einer anderen Form ausgestalteten Vorsprung oder ähnliches aufweisen, mittels welchem die Seitenscheibe in einer Winkelnut der Profilleiste gehalten werden kann. Die Winkelnut ist hierbei vorteilhafterweise größtenteils komplementär zu der Stufe oder dem Vorsprung ausgestaltet.

Hinsichtlich der Stabilität der mit dem Vitrinenbausatz auszubildenden Vitrine hat es sich auch als geeignet gezeigt, wenn zwischen der Seitenscheibe und dem Befestigungsabschnitt, in der Winkelnut wenigstens ein Kleb- oder Dichtstoff vorgesehen ist. Durch das Anbringen eines Kleb- oder Dichtstoffes kann die Profilleiste dauerhaft an der jeweiligen Seitenscheibe angebracht werden, was sich vereinfachend auf die Montage und Demontage der Vitrine auswirkt, jedoch keinen Einfluss auf die Zerlegbarkeit der Vitrine hat, da diese immer noch durch das wieder lösbare Verbinden der Profilleisten mittels der Profilleistenverbindungselemente gegeben ist. Als Kleb- und Dichtstoffe können unterschiedliche Kleber, Silikon, Acryl oder andere Dichtstoffe verwendet werden.

Als vorteilhaft hat es sich auch herausgestellt, wenn in dem Halteabschnitt eine quer zur Längsrichtung der Profilleiste ausgerichtete Durchgangsbohrung zur Aufnahme eines Befestigungselementes vorgesehen ist. Mittels einer solchen Durchgangsbohrung kann die auf die Profilleiste aufgelegte Boden- oder Deckplatte an der Profilleiste fixiert werden. Hierzu weist die Boden- oder Deckplatte günstigerweise ein in die Durchgangsbohrung einbringbares Befestigungselement oder eine identisch zu der Durchgangsbohrung der Profilleiste ausgebildete Durchgangsbohrung auf, in welche ein Befestigungselement eingebracht werden kann. Das Befestigungselement kann beispielsweise in Form einer Schraube, eines Stiftes oder eines Gewindebolzens ausgebildet sein und mittels einer Mutter oder eines anderen Gegenhalteelementes, wie beispielsweise eines Einspannmechanismus, verbunden und gehalten werden. Die Anzahl, Anordnung und Abmessungen der Durchgangsbohrungen und entsprechenden Befestigungselemente sollte anwendungsfallspezifisch gewählt werden. Zur Fixierung der Boden- und/oder Deckplatte sind aber prinzipiell zwei Durchgangsbohrungen pro Profilleiste ausreichenden. Vorteilhafterweise befinden sich die Durchgangsbohrungen in den Endbereichen der Profilleisten.

Ebenso kann mittels der in dem Halteabschnitt eingebrachten Durchgangsbohrung die Profilleiste und damit die Vitrine auch an einem Unterboden oder Untergestell befestigt werden. Hierdurch kann beispielsweise ein Verschieben oder ungewünschter Transport der Vitrine vermieden werden. Auch hier kann die Befestigung beispielsweise durch Verschrauben mit dem Unterboden oder Untergestell realisiert werden.

Damit die Deck- und/oder Bodenplatte schonend, ohne Beschädigung, auf der Profilleiste platziert werden kann, hat es sich zudem als günstig erwiesen, wenn wenigstens zwischen dem Halteabschnitt und der Deck- oder Bodenplatte eine Dichtung vorgesehen ist. Die Dichtung ist zumindest an einer horizontal ausgerichteten, zu der Boden- oder Deckplatte zeigenden, die Boden- oder Deckplatte tragenden Fläche vorgesehen. Ferner kann die Dichtung aber auch zusätzlich an vertikal ausgerichteten Flächen des Halteabschnittes, welche zu der Boden- oder Deckplatte hin ausgerichtet sind, vorgesehen sein. Je nach Ausgestaltungsvariante des erfindungsgemäßen Vitrinenbausatzes kann die Dichtung beispielsweise aus Gummi, Silikon, Acryl oder einem anderen dämpfenden Werkstoff ausgebildet sein.

Für eine besonders gute Sichtbarkeit der in der auszubildenden Vitrine platzierten Exponate hat es sich als optimal herausgestellt, wenn die Profilleiste im Querschnitt nicht höher und nicht breiter als 1 cm ist. Selbstverständlich kann die Profilleiste auch dünner oder breiter ausgebildet sein, wobei jedoch mit zunehmender Breite die Sichtbarkeit auf Exponate in der Vitrine beschränkt wird und mit abnehmender Dicke der Profilleiste die Fixierbarkeit der Profilleiste an der Seitenscheibe abnimmt.

Besonders bevorzugt ist die Profilleiste aus Aluminium ausgebildet. Dies ist nicht nur optisch ansprechend, sondern auch hinsichtlich fertigungstechnischer und stabilitätstechnischer Gründe vorteilhaft. Ebenso kann die Profilleiste jedoch auch aus Kunststoff, Holz oder einem anderen Metall ausgebildet sein.

Aus dem erfindungsgemäßen Vitrinenbausatz kann eine Vitrine mit einer Deckplatte; einer Bodenplatte oder einem Unterboden; und vier rahmenlosen Seitenscheiben, die eine Scheibenvorderseite, eine Scheibenrückseite, einen sich zwischen der Scheibenvorderseite und der Scheibenrückseite erstreckenden Scheibenrand und vier Scheibenecken aufweisen, wobei an jeder der Seitenscheiben jeweils zwei Profilleisten vorgesehen sind, die sich von einer ersten der Scheibenecken bis zu einer zweiten der Scheibenecken entlang des Scheibenrandes erstrecken, wobei die Profilleisten einen entweder den Scheibenrand und die Scheibenrückseite in einem Randbereich, oder nur die Scheibenrückseite in einem Randbereich, oder nur den Scheibenrand bedeckenden Befestigungsabschnitt und einen sich an den Befestigungsabschnitt anschließenden und die Deckplatte- oder die Bodenplatte oder das Untergestell oder den Unterboden haltenden Halteabschnitt aufweisen, gefertigt werden.

Diese Vitrine zeichnet sich dadurch aus, dass der Befestigungsabschnitt mit dem Scheibenrand und/oder dem Randbereich der Scheibenrückseite verklebt ist, und in dem Halteabschnitt wenigstens eine in Längsrichtung der Profilleiste verlaufende Aufnahme mit einem darin aufgenommenen oder aufnehmbaren, gelenkig ausgebildeten Profilleistenverbindungselement vorgesehen ist.

Es gibt ferner zwei miteinander durch ein Profilleistenverbindungselement gelenkig verbundene Profilleisten zur Verwendung in einem erfindungsgemäßen Vitrinenbausatz. Jede der Profilleisten weist einen gerade verlaufenden Befestigungsabschnitt, der mit einem Scheibenrand und/oder einem Randbereich einer Scheibenrückseite verklebbar ist, und einen Halteabschnitt, in dem wenigstens eine in Längsrichtung der Profilleiste verlaufende Aufnahme ausgebildet ist, auf, wobei das Profilleistenverbindungselement in der Aufnahme beider Profilleisten aufgenommen ist.

Das Profilleistenverbindungselement weist in einer bevorzugten Ausführungsform zwei über ein Gelenk miteinander verbundene Dübel auf, welche zum Verbinden der zwei Profilleisten jeweils in eine Aufnahme der Profilleiste eingesteckt werden. Durch das zwischen den Dübeln vorgesehene Gelenk, können die Profilleisten in unterschiedlichen Winkeln zueinander angeordnet werden. Dies hat sich insbesondere bei der Montage und Demontage einer damit auszubildenden Vitrine als vorteilhaft herausgestellt.

Für einen besonders guten Halt der Dübel in den Aufnahme der Profilleisten weisen die Dübel vorteilhafterweise jeweils eine Einschnürung auf. Ebenso kann das jeweils verwendete Profilleistenverbindungselement jedoch auch ganz anders ausgestaltet sein. So kann das Profilleistenverbindungselement beispielsweise zwei stab-, rohr-, kugel-, kegel- oder würfelartige Elemente aufweisen, welche durch ein Gelenk miteinander verbunden sind. In weiteren Ausführungsformen kann auch auf eine gelenkige Verbindung dieser zwei Elemente verzichtet werden und die zwei Elemente können in einem festgelegten Winkel zueinander angeordnet werden. Um einen guten Halt der zwei Elemente in den Aufnahmen der von diesen zwei Elementen zu verbindenden Profilleisten zu gewährleisten, ist es vorteilhaft, wenn die Aufnahmen in diesen zu verbindenden Profilleisten komplementär oder zumindest teilweise komplementär zu den in diesen Aufnahmen einzubringenden Elementen des jeweiligen Profilleistenverbindungselementes ausgebildet sind.

Die Profilleisten an sich können vorteilhafterweise als längliche Schienen ausgebildet sein, welche einen Halteabschnitt und einen Befestigungsabschnitt aufweisen. Mittels des Befestigungsabschnittes kann die Profilleiste an einer Scheibe, beispielsweise einer aus Glas ausgebildeten Seitenscheibe einer Vitrine oder eines Vitrinenelementes, befestigt werden. Der Halteabschnitt der Profilleiste, welcher sich unmittelbar an den Befestigungsabschnitt anschließt, dient der Aufnahme einer Scheibe, beispielsweise einer Deck- oder Bodenplatte einer Vitrine oder eines Vitrinenelementes.

Die Profilleisten können beispielsweise einen L-, T- oder Z-förmigen Querschnitt aufweisen, womit diese besonders einfach an einer Scheibe befestigbar sind und zugleich ein Halteabschnitt ausgebildet wird, welcher der Aufnahme einer weiteren Scheibe dient. Besonders bevorzugt sind die Profilleisten, also der Halteabschnitt und der Befestigungsabschnitt, einstückig ausgebildet.

Die der Aufnahme der Profilleistenverbindungselemente dienenden Aufnahmen sind stirnseitig in die Profilleisten eingebracht. Je nachdem ob die Profilleiste mit einer oder zwei weiteren Profilleisten verbunden werden soll, können die Aufnahmen beidseitig oder in einer Stirnseite der Profilleiste vorgesehen sein.

Für ein bündiges Verbinden der Profilleisten miteinander ist es zudem günstig, wenn die Profilleisten an ihren Verbindungsseiten eine Gehrung aufweisen.

Hinsichtlich der Ausgestaltung der Profilleisten hat es sich zudem als vorteilhaft erwiesen, wenn die Profilleisten aus Aluminium ausgebildet sind und im Querschnitt nicht höher und nicht breiter als 1 cm sind. Ebenso können die Profilleisten aber auch aus Holz, Plastik, Glas oder einem anderen Metall ausgebildet sind und andere Abmessungen aufweisen.

Bevorzugte Ausführungsformen der vorliegenden Erfindung, deren Aufbau, Funktion und Vorteile werden im Folgenden anhand von Figuren näher erläutert, wobei
- Figur 1: eine Ausführungsform eines erfindungsgemäßen Vitrinenbausatzes in einer Seitenansicht zeigt,
- Figur 2: eine weitere Ausgestaltungsvariante eines erfindungsgemäßen Vitrinenbausatzes in einer Seitenansicht zeigt,
- Figur 3: eine dritte Ausgestaltungsmöglichkeit eines erfindungsgemäßen Vitrinenbausatzes in einer Seitenansicht zeigt,
- Figur 4: eine vierte Variante eines erfindungsgemäßen Vitrinenbausatzes in einer Seitenansicht zeigt,
- Figur 5: die in Figur 4 gezeigte Ausgestaltungsvariante eines erfindungsgemäßen Vitrinenbausatzes mit einer auf einer Profilleiste aufgelegten Deckplatte in einer Seitenansicht zeigt, und
- Figur 6: ein zu dem erfindungsgemäßen Vitrinenbausatz zugehöriges Profilleistenverbindungselement in einer Draufsicht zeigt.

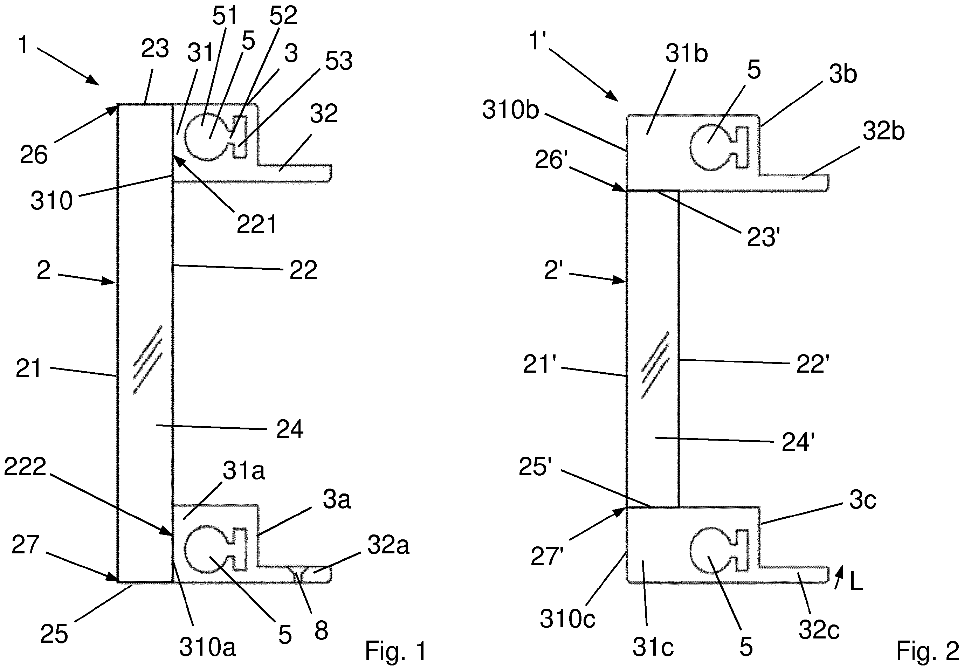

Es wird darauf verwiesen, dass gleiche Bezugszeichen in den Figuren 1 bis 6 gleiche Komponenten bezeichnen.

Figur 1 zeigt eine Ausführungsform eines erfindungsgemäßen Vitrinenbausatzes 1 in einer Seitenansicht.

Der Vitrinenbausatz 1 weist eine aus Glas ausgebildete Seitenscheibe 2 und zwei an einer Scheibenrückseite 22 der Seitenscheibe 2 angebrachte Profilleisten 3, 3a auf. Hierbei ist eine erste Profilleiste 3 in einem oberen Randbereich 221 der Scheibenrückseite 22 angeklebt und die zweite Profilleiste 3a an einem unteren Randbereich 222 der Scheibenrückseite 22 angeklebt.

Die erste Profilleiste 3 ist ebenso wie die zweite Profilleiste 3a aus Aluminium ausgebildet und weist einen im Querschnitt rechteckförmigen Befestigungsabschnitt 31, 31a sowie einen im Querschnitt L-förmigen Halteabschnitt 32, 32a auf. In weiteren Varianten des erfindungsgemäßen Vitrinenbausatzes 1 kann die Profilleiste 3, 3a jedoch auch aus Kunststoff, Holz oder einem beliebigen Metall bestehen und eine andere Querschnittsform aufweisen.

Der Befestigungsabschnitt 31, 31a dient der Befestigung der Profilleiste 3, 3a an der Seitenscheibe 2. Der sich an den Befestigungsabschnitt 31, 31a anschließende, hier einstückig mit dem Befestigungsabschnitt 31, 31a ausgebildete Halteabschnitt 32, 32a dient dem Halten einer Deckplatte 4 bzw. einer Bodenplatte der durch den Bausatz 1 auszubildenden Vitrine. In alternativen Ausgestaltungsvarianten des Vitrinenbausatzes 1 können der Befestigungsabschnitt 31, 31a und der Halteabschnitt 32, 32a auch aus zwei einzelnen Komponenten bestehen und beispielsweise durch Kleben miteinander verbunden werden.

In dem Halteabschnitt 32a der in dem unteren Randbereich 222 angebrachten Profilleiste 3a ist eine quer zur Längsrichtung der Profilleiste 3a verlaufende Durchgangsbohrung 8 eingebracht. Die Durchgangsbohrung 8 dient dem Befestigen der Profilleiste 3a und damit der Seitenscheibe 2 an einem nicht dargestellten Untergestell bzw. einem Unterboden. Ein Verrutschen oder ungewünschtes Transportieren einer durch den Vitrinenbausatz 1 ausgebildeten Vitrine wird damit vermieden bzw. erschwert. Ferner kann die Durchgangsbohrung 8 auch der Befestigung der Bodenplatte an der Profilleiste 3a dienen.

In alternativen Ausgestaltungsvarianten des erfindungsgemäßen Vitrinenbausatzes 1 kann auch die die Deckplatte 4 haltende Profilleiste 3 eine derartige Durchgangsbohrung 8 aufweisen, sodass auch die Deckplatte 4 mit der Profilleiste 3 verbunden werden kann, wodurch ein Eindringen in die Vitrine erschwert wird. Ebenso kann die Deckplatte 4 bzw. die Bodenplatte jedoch auch auf andere Art und Weise mit der Profilleiste 3, 3a verbunden werden, so beispielsweise mittels wenigstens eines Magnetes oder eines temporären Haftmittels.

Zum Verbinden von zwei Profilleisten 3, 3a aufweisenden Seitenscheiben zu einer Vitrine sind in den Halteabschnitten 32, 32a der Profilleisten 3, 3a Aufnahmen 5 zur Aufnahme eines Profilleistenverbindungselementes 6 vorgesehen. In dem in Figur 1 gezeigten Ausführungsbeispiel des Vitrinenbausatzes 1 ist an jedem Längsende jedes Halteabschnittes 32, 32a jeweils eine in Längsrichtung der Profilleiste 3, 3a verlaufende Aufnahme 5 angebracht. Hierdurch wird ermöglicht, dass die Seitenscheibe 2 beidseitig mit jeweils einer weiteren Seitenscheibe verbunden und eine quaderförmige Vitrine ausgebildet werden kann.

In dem gezeigten Ausführungsbeispiel sind die Aufnahmen 5 als Sacklochbohrung ausgebildet, was den Vorteil hat, dass die Aufnahmen 5 einfach und kostengünstig gefertigt werden können. In weiteren Varianten des erfindungsgemäßen Vitrinenbausatzes 1 können die Aufnahmen 5 jedoch auch andere Formen aufweisen. Günstigerweise weisen die Aufnahmen 5 aber immer eine Komplementär zu den Profilleistenverbindungselementen 6 ausgestaltete Form auf, da die Profilleistenverbindungselemente 6 so besonders sicher in den Aufnahmen 5 gehalten werden können. Die Länge der Aufnahme 5 sowie deren Durchmesser sowie die zugehörigen Abmessungen des verwendeten Profilleistenverbindungselementes 6 sollten vorteilhafterweise anwendungsfallspezifisch ausgewählt werden, sind jedoch insbesondere abhängig von den Abmessungen des Halteabschnittes 32, 32a.

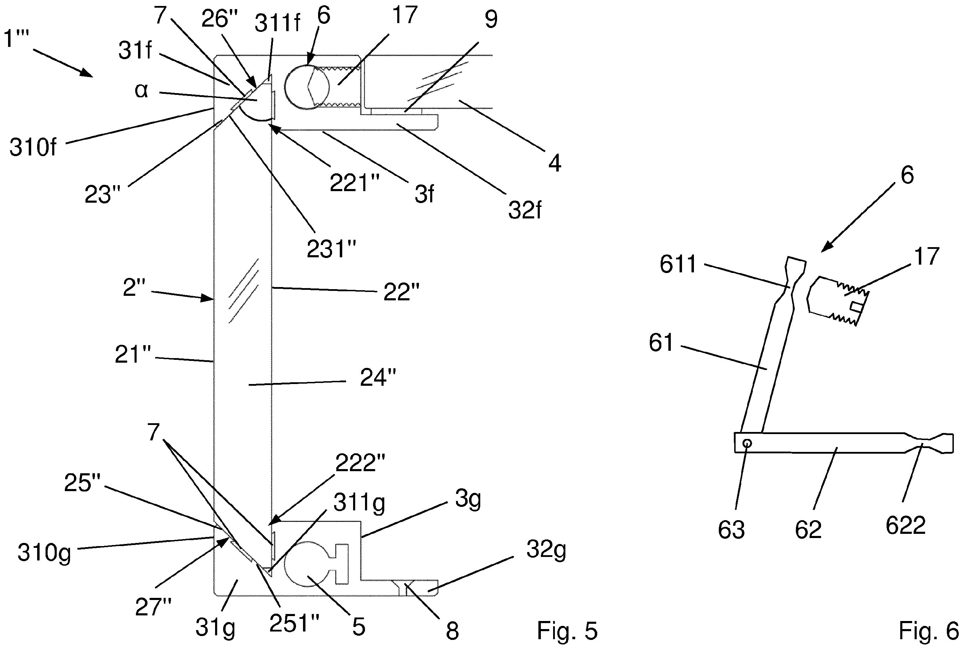

In der in Figur 1 gezeigten Ausführungsform des Vitrinenbausatzes 1 ist das Profilleistenverbindungselement 6 gelenkartig ausgebildet und besteht, wie in Figur 6 gezeigt, aus zwei Dübeln 61, 62, welche mittels eines Stiftes 63 gekoppelt sind. Zum Verbinden von zwei Seitenscheiben 2 wird ein erster Dübel 61 des Profilleistenverbindungselementes 6 in die Aufnahme 5 der oberen Profilleiste 3 gesteckt. Ein zweiter Dübel 62 des Profilleistenverbindungselementes 6 wird in eine Aufnahme 5 einer ebenfalls in einem oberen Randbereich angebrachten Profilleiste 3, 3a einer nicht dargestellten weiteren Seitenscheibe gesteckt. Durch die gelenkartige Ausgestaltung des Profilleistenverbindungselementes 6 können die beiden Seitenscheiben besonders einfach miteinander verbunden und in einem Winkel von 90° oder einem anderen beliebigen Winkel zwischen 90° und 180° zueinander angeordnet werden.

Da das Profilleistenverbindungselement 6 lediglich in die jeweilige Aufnahme 5 eingesteckt wird, ist eine einfach Montage sowie Demontage der durch den Vitrinenbausatz 1 auszubildenden Vitrine möglich. Ferner kann auch ein Dübel 61, 62 des Profilleistenverbindungselementes 3, 3a in der jeweiligen Aufnahme eingeklebt sein, wodurch ein Verlust des Profilleistenverbindungselementes 3, 3a während der Demontage und des Transportes der durch den Vitrinenbausatz 1 ausgebildeten Vitrine vermieden werden kann.

Durch die Ausgestaltung der Profilleisten 3, 3a mit einer maximalen Höhe von 1 cm ist der durch die Profilleisten 3, 3a ausgebildete Rahmen der Seitenscheibe bzw. der durch den Vitrinenbausatz 1 auszubildenden Vitrine kaum sichtbar und gewährt damit einen guten Einblick in das Innere der Vitrine. Dadurch, dass die Profilleistenverbindungselemente 6 nach der Montage der Vitrine im Inneren des durch den Profilleisten 3, 3a ausgebildeten Rahmens verschwinden, kann zudem durch den Vitrinenbausatz 1 eine optisch sehr ansprechende Vitrine bereitgestellt werden.

Figur 2 zeigt eine weitere Ausgestaltungsvariante eines erfindungsgemäßen Vitrinenbausatzes 1' in einer Seitenansicht.

Im Gegensatz zu der in Figur 1 gezeigten ersten Ausführungsvariante des erfindungsgemäßen Vitrinenbausatzes 1 sind bei dem in Figur 2 gezeigten Vitrinenbausatz 1' die Profilleisten 3b, 3c in funktionsgerechter Ausrichtung der durch den Bausatz 1' auszubildenden Vitrine an nach oben und unten zeigenden Scheibenrändern 23', 25' angebracht. Hierzu sind die Befestigungsabschnitte 31b, 31c der Profilleisten 3b, 3c im Vergleich zu den Befestigungsabschnitten 31, 31a der Profilleisten 3, 3a der Figur 1 länger ausgebildet.

Ebenso wie die Profilleisten 3, 3a der Figur 1 sind jedoch auch die Profilleisten 3b, 3c der Figur 2 mit den Scheibenrändern 23', 25' verklebt.

In der Gestaltungsvariante des Vitrinenbausatzes 1' der Figur 2 wurde, anders als bei der in Figur 1 gezeigten Variante, auf eine Durchgangsbohrung 8 in der unteren Profilleiste 3c verzichtet, sodass die Profilleiste 3c weder mit einem Untergestell oder einem Unterboden, noch mit einer Bodenplatte verschraubt werden kann. Insofern auf eine derartige Durchgangsbohrung 8 verzichtet wird, wird die durch den Vitrinenbausatz 1' ausgebildete Vitrine entweder nur auf einem Unterboden oder einem Untergestell aufgestellt oder in einer anderen Form mit dem Untergestell oder dem Unterboden verbunden. So kann die Vitrine bzw. die unteren Profilleisten 3c der Vitrine beispielsweise mittels eines temporären Haftmittels an dem Unterboden oder dem Untergestell befestigt werden.

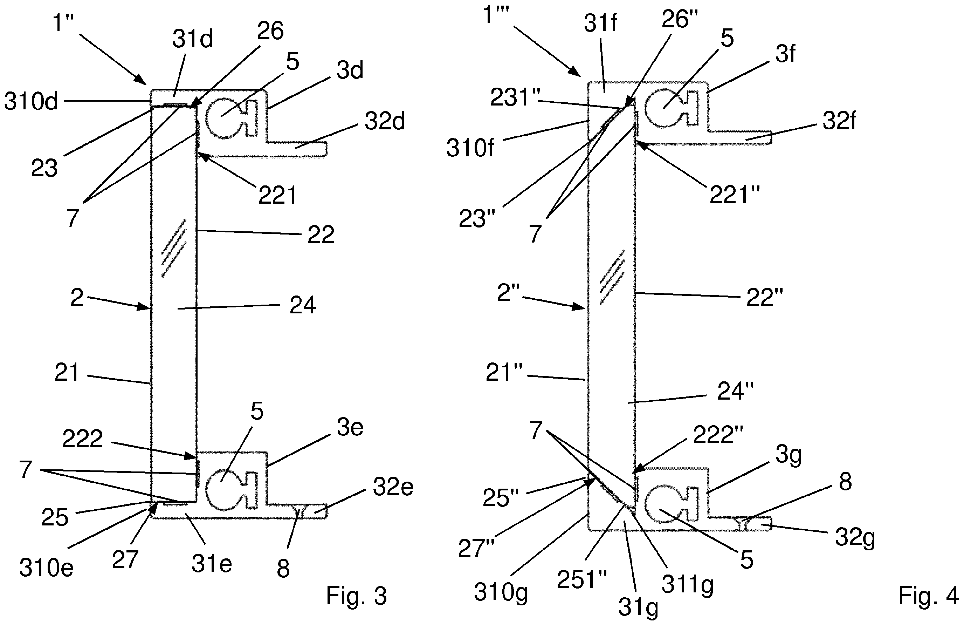

Figur 3 zeigt eine dritte Ausgestaltungsmöglichkeit eines erfindungsgemäßen Vitrinenbausatzes 1" für eine Vitrine in einer Seitenansicht. Bei diesem Vitrinenbausatz 1" sind die Befestigungsabschnitte 3d, 3e L-förmig ausgebildet. Die L-förmigen Befestigungsabschnitte 3d, 3e sind hierbei so ausgerichtet, dass diese an den nach oben und unten zeigenden Scheibenränder 23, 25 sowie an den oberen und unteren Randbereichen 221, 222 der Scheibenrückseite 22 anliegen. Bei einer solchen Ausgestaltungsvariante des erfindungsgemäßen Vitrinenbausatzes 1" wird die Seitenscheibe 2 besonders sicher durch die Profilleisten 3d, 3e gehalten.

Zur Befestigung der Profilleisten 3d, 3e an der Seitenscheibe 2 ist zwischen dem Randbereich 221, 222 der Scheibenrückseite 22 und dem Befestigungsabschnitt 31d, 31e sowie zwischen dem Scheibenrand 23, 25 und dem Befestigungsabschnitt 31d, 31e eine Dichtung 7 vorgesehen. Die Dichtung 7 ist in dem in Figur 3 gezeigten Beispiel aus Silikon ausgebildet, kann in weiteren Varianten des Bausatzes 1" jedoch auch aus Acryl oder einem anderen Klebstoff bestehen.

Für eine optisch sehr ansprechende Vitrine schließt eine Vorderkante 310d, 310e der Profilleiste 3d, 3e bündig mit der Scheibenvorderseite 21 der Seitenscheibe 2 ab.

Figur 4 zeigt eine vierte Variante eines erfindungsgemäßen Vitrinenbausatzes 1‴ für eine Vitrine in einer Seitenansicht, wobei in diesem Ausführungsbeispiel die nach oben und unten zeigenden Scheibenränder 23", 25" der Seitenscheibe 2" eine Fase 231", 251" aufweisen. Die Fase 231", 251" ist so ausgerichtet, dass sich die Dicke der Seitenscheibe 2" in Richtung des Halteabschnittes 32f, 32g der Profilleisten 3f, 3g verjüngt.

Zur optimalen Befestigung der Profilleisten 3f, 3g an einer solchen Seitenscheibe 2" weisen die Befestigungsabschnitte 31f, 31g der Profilleisten 3f, 3g jeweils eine komplementär zu der Fase 231", 251" ausgebildete, in Längsrichtung der Profilleiste 3f, 3g verlaufende Winkelnut 311f, 311g auf. In dem in Figur 3 gezeigten Ausführungsbeispiel des Vitrinenbausatzes 1‴ weist die Winkelnut 311f, 311g einen dreieckigen Querschnitt auf. In alternativen Varianten des erfindungsgemäßen Vitrinenbausatzes kann die in den Befestigungsabschnitt 31f, 31g eingebrachte Winkelnut 311f, 331g aber auch einen anderen Querschnitt aufweisen. So kann die Winkelnut 311f, 311g beispielsweise einen rechteckigen oder trapezförmigen Querschnitt besitzen. Ferner muss die Winkelnut 311f, 311g auch nicht komplett komplementär zu der Form des Randbereiches der Seitenscheibe 2" ausgebildet sein, sondern kann auch nur teilweise komplementär zu dem Randbereich ausgestaltet sein.

Die Winkelnut 311f, 311g ist, in dem in Figur 4 gezeigten Ausführungsbeispiel des Vitrinenbausatzes 1''', so in dem Befestigungsabschnitt 31f, 31g angeordnet, dass die Vorderkante 310f, 310g der Profilleiste 3f, 3g bündig mit der Scheibenvorderseite 21" abschließt. Ebenso kann die Profilleiste 3f, 3g in weiteren Varianten des erfindungsgemäßen Vitrinenbausatzes 1‴ aber auch über die Scheibenvorderseite 21" hinausragen oder gegenüber dieser nach hinten eingerückt sein.

Die Höhe und Breite der Profilleiste 3f, 3g kann prinzipiell frei gewählt werden. In dem gezeigten Ausführungsbeispiel weist die Profilleiste 3f, 3g jedoch eine Höhe und Breite in einem Bereich von 0,8 cm bis auf 1,5 cm, vorzugsweise 1 cm, auf. Eine solche Höhe und Breite hat sich als besonders vorteilhaft erwiesen, da bei einer solchen Höhe und Breite die Seitenscheibe 2" besonders gut gehalten werden kann und zugleich der Einblick ins Innere der Vitrine nicht unnötig durch die Profilleiste 3f, 3g verhindert wird.

Figur 5 zeigt die in Figur 4 gezeigte Ausgestaltungsvariante eines erfindungsgemäßen Vitrinenbausatzes 1‴ mit einer auf einer Profilleiste 3f aufgelegten Deckplatte 4 in einer Seitenansicht. In dem gezeigten Ausführungsbeispiel ist die Deckplatte 4 lediglich auf die Profilleiste 3f aufgelegt, ohne zusätzlich befestigt zu sein. In weiteren Varianten des erfindungsgemäßen Bausatzes 1‴ kann die Deckplatte 4 aber auch temporär mit der Profilleiste 3f beispielsweise mittels wenigstens einer Schraube, eines Stiftes oder eines temporären Haftmittels verbunden sein.

Zwischen der Deckplatte 4 und dem Halteabschnitt 32f der Profilleiste 3f ist eine Dichtung 9 vorgesehen, welche eine schonende Ablage der Deckplatte 4 auf der aus Aluminium ausgebildeten Profilleiste 3f ermöglicht. In dem gezeigten Beispiel ist die Dichtung 9 aus Silikon ausgebildet, diese kann in weiteren Varianten jedoch auch aus Acryl oder einem Gummi bestehen.

In der in Figur 5 dargestellten Variante des Vitrinenbausatzes 1‴ ist in die in dem Halteabschnitt 32f vorgesehene Aufnahme 5 ein Profilleistenverbindungselement 6 eingesteckt, mittels welchem zwei aneinandergrenzende Profilleisten 3f verbunden werden können.

Das verwendete Profilleistenverbindungselement 6 ist in Figur 6 detaillierter in einer Draufsicht gezeigt.

Das Profilleistenverbindungselement 6 besteht aus zwei Dübeln 61, 62, welche an einem Ende mittels eines Stiftes 63 beweglich miteinander verbunden sind. Um die Dübel 61, 62 optimal miteinander verbinden zu können, ist in dem Ende eines ersten der zwei Dübel 62 eine Aussparung vorgesehen, in welche das Ende eines zweiten der zwei Dübel 61 eingebracht wird. Damit der zweite Dübel 61, trotz dessen, dass dieser den gleichen Durchmesser wie der erste Dübel 61 aufweist, in die Aussparung des ersten Dübels 62 aufgenommen werden kann, ist das Ende des zweiten Dübels 61 abgeflacht und an die Größe und Form der Aussparung des ersten Dübels 62 angepasst.

In alternativen Ausgestaltungsvarianten des erfindungsgemäßen Vitrinenbausatzes können die beiden Dübel aber auch auf andere Art und Weise miteinander verbunden sein. So kann beispielsweise anstatt eines Stiftes auch eine Schraube zum Verbinden der Dübel 61, 62 verwenden werden, oder die Enden der beiden Dübel 61, 62 werden in gelenkig miteinander verbundene Aufnahmevorrichtungen eingesteckt. Je nachdem, wie das Profilleistenverbindungselement 6 ausgestaltet ist, ist auch die Aufnahme 5 für das Profilleistenverbindungselement 6 auszubilden. Vorteilhafterweise ist die Aufnahme 5 nämlich komplementär bzw. überwiegend komplementär zu dem Profilleistenverbindungselement 6 ausgestaltet, damit das Profilleistenverbindungselement 6 sicher, ohne herauszurutschen oder zu wackeln in die Aufnahme 5 eingesteckt werden kann. Ferner sollte es auch vermieden werden, die Aufnahme 5 zu klein auszubilden, da so das Profilleistenverbindungselement 6 nicht komplett in die Aufnahme 5 eingesteckt werden kann, wodurch sich ein unschöner Spalt zwischen den zwei zu verbindenden Seitenscheiben 2 ergeben kann.

Durch die bewegliche Verbindung der Dübel 61, 62 können zwei Profilleisten 3, 3a, 3b, 3c, 3d, 3e, 3f, 3g besonders leicht verbunden und in einem Winkel zwischen 90° oder 180° zueinander ausgerichtet werden. Hierzu wird der eine Dübel 61 in die erste Profilleiste 3, 3a, 3b, 3c, 3d, 3e, 3f, 3g und der zweite Dübel 62 in die zweite, mit der ersten Profilleiste 3, 3a, 3b, 3c, 3d, 3e, 3f, 3g zu verbindenden Profilleiste 3, 3a, 3b, 3c, 3d, 3e, 3f, 3g eingesteckt. Durch die dübelartige Ausgestaltung des Profilleistenverbindungselementes 6 können die Dübel 61, 62 nicht nur besonders einfach in die Aufnahmen 5 der Profilleisten 3, 3a, 3b, 3c, 3d, 3e, 3f, 3g eingesteckt werden, sondern auch ganz einfach bei der Demontage der Vitrine wieder aus den Aufnahmen 5 herausgezogen werden.

Für ein besonders leichtes Einführen der Dübel 61, 62 sowie zur Fixierung der Dübel 61, 62 in den Aufnahmen 5 ist an den nicht miteinander verbundenen Enden der Dübel 61, 62 jeweils eine Einschnürung 611, 622 vorgesehen. Hier greift eine Madenschraube 17 ein, um die Verbindung zwischen den Elementen herzustellen.

Die Einschnürung 611, 622 ist in dem gezeigten Beispiel in Form einer um den Umfang verlaufenden V-förmigen Kerbe ausgestaltet. Ferner kann die Einschnürung 611, 622 in anderen Varianten aber auch einen rechteckigen oder U-förmigen Querschnitt aufweisen.

Beim Lösen der Madenschraube 17 können die Dübel 61, 62 aus der Aufnahme 5 herausgezogen werden.

## Patentansprüche

1. Vitrinenbausatz (1'''), wobei eine Vitrine eine Vorrichtung oder eine Bauelementekombination ist, die wenigstens eine durchsichtige Seitenscheibe besitzt, durch welche Objekte, die sich hinter dieser Seitenscheibe befinden, von außen sichtbar sind, mit
wenigstens einer rahmenlosen Seitenscheibe (2"), die eine Scheibenvorderseite (21"), eine Scheibenrückseite (22"), einen sich zwischen der Scheibenvorderseite (21") und der Scheibenrückseite (22") erstreckenden Scheibenrand (23", 24", 25") und vier Scheibenecken (26", 27") aufweist,
und wenigstens einer Profilleiste (3f, 3g), die sich von einer ersten der Scheibenecken (26", 27") bis zu einer zweiten der Scheibenecken (26", 27") entlang des Scheibenrandes (23", 24", 25") erstreckt,
wobei die Profilleiste (3f, 3g) einen entweder
den Scheibenrand (23", 24", 25") und die Scheibenrückseite (22") in einem Randbereich (221", 222"),
oder nur die Scheibenrückseite (22") in einem Randbereich (221", 222"),
oder nur den Scheibenrand (23", 24", 25")
bedeckenden Befestigungsabschnitt (31f, 31g)
und einen sich an den Befestigungsabschnitt 31f, 31g) anschließenden Halteabschnitt (32f, 32g) aufweist, wobei
der Befestigungsabschnitt (31f, 31g) mit dem Scheibenrand (23", 24", 25") und/oder dem Randbereich (221", 222") der Scheibenrückseite (22") verklebt ist, und
in dem Halteabschnitt (32f, 32g) wenigstens eine in Längsrichtung (L) der Profilleiste (3f, 3g) verlaufende Aufnahme (5) mit einem darin aufgenommenen oder aufnehmbaren, gelenkig ausgebildeten Profilleistenverbindungselement (6) vorgesehen ist, wobei der Scheibenrand (23", 24", 25") eine Fase (231", 251") und der Befestigungsabschnitt (31f, 31g) eine zumindest teilweise komplementär zu der Fase (231", 251") ausgebildete Winkelnut (311f, 311g) aufweisen, wobei die Fase (231", 251") so ausgerichtet ist, dass sich die Dicke der Seitenscheibe in Richtung des Halteabschnittes (32f, 32g) verjüngt und die Scheibenvorderseite (21") bündig mit einer Vorderkante (310f, 310g) des Befestigungsabschnittes (31f, 31g) abschließt,
**dadurch gekennzeichnet,**
**dass** die Fase (231", 251") eine Gehrung ausbildet und die Winkelnut (311f, 311g) einen dreieckigen Querschnitt aufweist.

2. Vitrinenbausatz nach Anspruch 1, **dadurch gekennzeichnet, dass** das Profilleistenverbindungselement (6) zwei, über ein Gelenk verbundene Dübel (61, 62) aufweist.

3. Vitrinenbausatz nach Anspruch 2, **dadurch gekennzeichnet, dass** die Dübel (61, 62) jeweils eine Einschnürung (611, 621) aufweisen.

4. Vitrinenbausatz nach wenigstens einem der vorhergehenden Ansprüche, **dadurch gekennzeichnet, dass** die Profilleiste (3f, 3g) einen L-, T- oder Z-förmigen Querschnitt aufweist.

5. Vitrinenbausatz nach wenigstens einem der vorhergehenden Ansprüche, **dadurch gekennzeichnet, dass** der Befestigungsabschnitt (31f, 31g) zumindest teilweise komplementär zu einem Winkel (a) ausgebildet ist, den der Scheibenrand (23", 24", 25") mit der Scheibenrückseite (22") ausbildet.

6. Vitrinenbausatz nach wenigstens einem der vorhergehenden Ansprüche, **dadurch gekennzeichnet, dass** zwischen der Seitenscheibe (2") und dem Befestigungsabschnitt (31f, 31g), in der Winkelnut (311f, 311g) wenigstens ein Kleb- oder Dichtstoff (7) vorgesehen ist.

7. Vitrinenbausatz nach wenigstens einem der vorhergehenden Ansprüche, **dadurch gekennzeichnet, dass** in dem Halteabschnitt (32f, 32g) eine quer zur Längsrichtung der Profilleiste (3f, 3g) ausgerichtete Durchgangsbohrung (8) zur Aufnahme eines Befestigungselementes vorgesehen ist.

8. Vitrinenbausatz nach wenigstens einem der vorhergehenden Ansprüche, **dadurch gekennzeichnet, dass** wenigstens zwischen dem Halteabschnitt (32f, 32g) und einer Deck- oder Bodenplatte (4) des Vitrinenbausatzes (1‴) eine Dichtung (9) vorgesehen ist.

9. Vitrinenbausatz nach wenigstens einem der vorhergehenden Ansprüche, **dadurch gekennzeichnet, dass** die Profilleiste (3f, 3g) im Querschnitt nicht höher und nicht breiter als 1 cm ist.

10. Vitrinenbausatz nach wenigstens einem der vorhergehenden Ansprüche, **dadurch gekennzeichnet, dass** die Aufnahme (5) einen runden Querschnittsteil (51) und einen damit über einen Verbindungssteg (52) verbundenen rechteckigen Querschnittsteil (53) aufweist.

## Claims

1. Display case kit (1‴), wherein a display case is a device or a combination of components having at least one transparent side pane through which objects being behind this side pane are visible from the outside, with at least one frameless side pane (2") comprising a pane front side (21"), a pane back side (22"), a pane edge (23", 24", 25") extending between the pane front side (21") and the pane back side (22"), and four pane corners (26", 27"),
and at least one profile strip (3f, 3g) extending along the pane edge (23", 24", 25") from a first of the pane corners (26", 27") to a second of the pane corners (26", 27"),
wherein the profile strip (3f, 3g) comprises a fixation section (31f, 31g) covering either the pane edge (23", 24", 25") and the pane back side (22") in an edge region (221", 222"),
or only the pane back side (22") in an edge region (221", 222"),
or only the pane edge (23", 24", 25"),
and a holding section (32f, 32g) being arranged subsequent to the fixation section (31f, 31g), wherein
the fixation section (31f, 31g) is glued with the pane edge (23", 24", 25") and/or the edge region (221", 222") of the pane back side (22"),
and
at least one receiver (5) is provided in the holding section (32f, 32g), which receiver extends in longitudinal direction (L) of the profile strip (3f, 3g) and comprises a flexibly formed profile strip connecting element (6) inserted or insertable therein, the pane edge (23", 24", 25") comprising a chamfer (231", 251") and the fixation section (31f, 31g) comprising an angle groove (311f, 311g) being formed at least partially complementary to the chamfer (231", 251"), the chamfer (231", 251") being aligned in such a way that the thickness of the side pane tapers towards the holding section (32f, 32g) and the pane front side (21") lines up precisely with a front edge (310f, 310g) of the fixation section (31f, 31g), **characterized in that**
the chamfer (231", 251") forms a miter and the angle groove (311f, 311g) comprises a triangular cross section.

2. Display case kit according to claim 1, **characterized in that** the profile strip connecting element (6) comprises two dowels (61, 62) connected to each other by means of a hinge.

3. Display case kit according to claim 2, **characterized in that** the dowels (61, 62) each comprise a necking (611, 621).

4. Display case kit according to at least one of the preceding claims, **characterized in that** the profile strip (3f, 3g) comprises an L-, T- or Z-shaped cross section.

5. Display case kit according to at least one of the preceding claims, **characterized in that** the fixation section (31f, 31g) is formed at least partially complementary to an angle (a), which the pane edge (23", 24", 25") forms with the pane back side (22").

6. Display case kit according to at least one of the preceding claims, **characterized in that** at least one adhesive or sealant (7) is provided in the angle groove (311f, 311g), between the side pane (2") and the fixation section (31f, 31g).

7. Display case kit according to at least one of the preceding claims, **characterized in that** a through hole (8) for receiving a fixation element aligned transversely to the longitudinal direction of the profile strip (3f, 3g) is provided in the holding section (32f, 32g).

8. Display case kit according to at least one of the preceding claims, **characterized in that** at least one sealing (9) is provided between the holding section (32f, 32g) and the cover or bottom plate (4) of the display case kit (1‴).

9. Display case kit according to at least one of the preceding claims, **characterized in that** the profile strip (3f, 3g) is not higher and not wider than 1 cm in its cross section.

10. Display case kit according to at least one of the preceding claims, **characterized in that** the receiver (5) comprises a round cross section part (51) and a rectangular cross section part (53) connected therewith by a connecting bar (52).

## Revendications

1. Kit de vitrine (1‴), dans lequel une vitrine est un dispositif ou une combinaison de composants qui possède au moins une vitre latérale transparente à travers laquelle des objets qui se trouvent derrière ladite vitre latérale sont visibles de l'extérieur, comportant
au moins une vitre latérale (2") sans cadre, laquelle présente une face avant de vitre (21"), une face arrière de vitre (22"), un bord de vitre (23", 24", 25") s'étendant entre la face avant de vitre (21") et la face arrière de vitre (22") et quatre coins de vitre (26", 27"),
et au moins une bande profilée (3f, 3g) qui s'étend depuis un premier des coins de vitre (26", 27") jusqu'à un deuxième des coins de vitre (26", 27") le long du bord de vitre (23", 24", 25"), la bande profilée (3f, 3g) présentant une partie de fixation (31f, 31g) recouvrant soit
le bord de vitre (23", 24", 25") et la face arrière de vitre (22") dans une zone de bord (221", 222"),
ou soit seulement la face arrière de vitre (22") dans une zone de bord (221", 222"),
ou soit seulement le bord de vitre (23", 24", 25"),
et
une partie de maintien (32f, 32g) adjacente à la partie de fixation (31f, 31g),
la partie de fixation (31f, 31g) étant collée sur le bord de vitre (23", 24", 25") et/ou la zone de bord (221", 222") de la face arrière de vitre (22"), et
au moins un logement (5) s'étendant dans la direction longitudinale (L) de la bande profilée (3f, 3g) et comportant un élément de liaison de bande profilée (6) articulé et reçu ou pouvant être reçu à l'intérieur dudit logement étant prévu dans la partie de maintien (32f, 32g), le bord de vitre (23", 24", 25") présentant un biseau (231", 251") et la partie de fixation (31f, 31g) présentant une rainure angulaire (311f, 311g) qui est conçue au moins partiellement complémentaire au biseau (231", 251"), le biseau (231", 251") étant aligné de telle sorte que l'épaisseur de la vitre latérale diminue en direction de la partie de maintien (32f, 32g) et la face avant de vitre (21") fait une jonction parfaite avec une arête avant (310f, 310g) de la partie de fixation (31f, 31g),
**caractérisé en ce**
**que** le biseau (231", 251") forme un onglet et la rainure angulaire (311f, 311g) présente une section transversale triangulaire.

2. Kit de vitrine selon la revendication 1, **caractérisé en ce que** l'élément de liaison de bande profilée (6) présente deux goujons (61, 62) reliés par l'intermédiaire d'une jointure.

3. Kit de vitrine selon la revendication 2, **caractérisé en ce que** les goujons (61, 62) présentent un rétrécissement (611, 621) respectivement.

4. Kit de vitrine selon au moins l'une des revendications précédentes, **caractérisé en ce que** la bande profilée (3f, 3g) présente une section transversale en forme de L, de T ou de Z.

5. Kit de vitrine selon au moins l'une des revendications précédentes, **caractérisé en ce que** la partie de fixation (31f, 31g) est conçue au moins partiellement complémentaire à un angle (a) que le bord de vitre (23", 24", 25") conçoit avec la face arrière de vitre (22").

6. Kit de vitrine selon au moins l'une des revendications précédentes, **caractérisé en ce qu'**au moins un matériau adhésif ou d'étanchéité (7) est prévu dans la rainure angulaire (311f, 311g), entre la vitre latérale (2") et la partie de fixation (31f, 31g).

7. Kit de vitrine selon au moins l'une des revendications précédentes, **caractérisé en ce qu'**un trou traversant (8) orienté transversalement par rapport à la direction longitudinale de la bande profilée (3f, 3g) est prévu dans la partie de maintien (32f, 32g) pour recevoir un élément de fixation.

8. Kit de vitrine selon au moins l'une des revendications précédentes, **caractérisé en ce qu'**un joint d'étanchéité (9) est prévu au moins entre la partie de maintien (32f, 32g) et une plaque supérieure ou inférieure (4) du kit de vitrine (1‴).

9. Kit de vitrine selon au moins l'une des revendications précédentes, **caractérisé en ce que** la bande profilée (3f, 3g) n'est pas plus haute et pas plus large que 1 cm dans sa section transversale.

10. Kit de vitrine selon au moins l'une des revendications précédentes, **caractérisé en ce que** le logement (5) présente une partie de section transversale ronde (51) et une partie de section transversale rectangulaire (53) reliée à celle-ci par l'intermédiaire d'une entretoise de liaison (52).
